# FASCICULE DE BREVET EUROPEEN

(11) **EP 2 133 505 B1**
(45) Date de publication et mention de la délivrance du brevet: **28.10.2015**
(21) Numéro de dépôt: 09360031.0
(22) Date de dépôt: 08.06.2009
(51) Int. Cl.: E06B 9/68, H02P 23/00, E06B 9/72

(54) **Dispositif de fermeture à tablier ou store repliable ou enroulable et à moteur d'entraînement électrique**
Verschlussvorrichtung in Form von Behang, Faltstore oder Rollo und mit elektrischem Antriebsmotor
Closing device with a shutter or a folding or rolling blind powered by an electric motor

(30) Priorité: 09.06.2008 FR 0853799
(43) Date de publication de la demande: 16.12.2009
(73) Titulaire: BUBENDORFF, 68220 Attenschwiller (FR)
(72) Inventeur: Jacquin, Dominique, 68130 Carspach (FR); Delpy, Vincent, 68300 Saint Louis (FR)
(74) Mandataire: Rhein, Alain

(56) Documents cités:
- EP-A- 0 833 435
- FR-A- 2 671 129

## Description

L'invention concerne un dispositif de fermeture à tablier ou store repliable ou enroulable, comportant un interrupteur de commande avec au moins un bouton pour la commande de repliement et de déploiement dudit tablier ou store sous l'impulsion d'un moteur d'entraînement électrique implanté d'un côté latéral ou de l'autre dudit tablier ou store, à ce moteur étant associés des moyens de sélection comportant une unité de contrôle conçue pour, au travers d'une interface de puissance, assurer la gestion du sens de rotation dudit moteur sous l'impulsion de moyens de commande adaptés.

La présente invention concerne plus particulièrement le domaine des systèmes d'occultation de type volet, volet repliable, store ou similaire.

A ce propos, si l'on prend l'exemple des volets roulants, ceux-ci comportent un tablier constitué de lames au moins articulées entre elles et définies aptes à venir s'enrouler sur un tube d'enroulement logé dans un caisson et maintenu en rotation à ses extrémités par l'intermédiaire de joues supports.

Il est de plus en plus courant d'équiper ces volets roulants d'un moteur d'entraînement de type tubulaire engagé dans l'une des extrémités du tube d'enroulement. Ce moteur comporte une extrémité, dite tête de moteur, qui est fixée sur l'une ou l'autre de ces joues supports aux extrémités latérales du caisson.

Le choix d'installation du moteur d'un côté ou de l'autre, dans le tube d'enroulement découle, habituellement, des contraintes d'alimentation en énergie électrique de ce moteur.

En effet, lors de l'équipement d'une construction d'un réseau électrique, il est usuel, pour le raccordement futur d'un tel volet roulant, non pas d'implanter systématiquement le boîtier électrique d'un même côté d'une ouverture de porte ou fenêtre, mais d'optimiser ce réseau d'alimentation en énergie électrique. Aussi, ce boîtier électrique peut être installé d'un côté ou de l'autre d'une porte ou fenêtre prévue pour être équipée ultérieurement d'un volet roulant motorisé, ceci en fonction des contraintes de câblage de la construction.

Pour éviter de faire traverser le caisson du volet roulant d'un câble de raccordement électrique, à la fois encombrant et susceptible de gêner les manoeuvres de déploiement et de repliement du tablier, on adapte habituellement la conception du volet roulant à ce réseau d'alimentation de la construction. En d'autres termes, le moteur est installé, selon le cas, à une extrémité ou l'autre du tube d'enroulement en fonction du côté où se trouve le boîtier pour son raccordement au réseau d'alimentation électrique.

A ce moteur est associé un interrupteur de commande accessible à l'usager et comportant usuellement deux boutons dont un permet de commander la montée et l'autre la descente du volet roulant.

Selon le câblage du moteur, celui-ci peut tourner dans un sens ou dans l'autre sous l'effet d'une impulsion exercée sur le bouton de commande « montée » de cet interrupteur. Aussi, en appuyant sur ce bouton « montée » un moteur câblé d'une certaine façon peut conduire au déploiement ou à l'enroulement du tablier du volet roulant, selon qu'il est installé d'un côté ou de l'autre du tube d'enroulement.

Il est donc important que le câblage du moteur soit adapté pour que, selon le côté d'installation du moteur, celui-ci tourne dans le bon sens et qu'une impulsion de commande « montée » ou, selon le cas, de « descente » sur l'interrupteur à portée de l'usager provoque bien l'enroulement, respectivement, le déroulement du tablier du volet roulant et non une manoeuvre inversée.

Si cette gestion du câblage pour la commande en rotation dans un sens ou dans l'autre du moteur est très aisée à réaliser avec des moyens de commande de type filaire, consistant en un interrupteur de commande relié par fils électriques au moteur du volet roulant, il n'en va pas de même pour une commande non filaire, de type infrarouge, radio ou similaire. En effet, en présence d'une commande filaire, il suffit à l'opérateur monteur d'inverser les fils de raccordement du moteur sur l'interrupteur de commande pour que le sens de rotation de ce moteur soit adapté à son implantation.

Dans le cas d'une installation à commande non filaire, le câblage des moteurs peut être physiquement adapté lors de leur fabrication. Cela consiste à gérer, sur une ligne de fabrication, la réalisation de deux moteurs différents, les uns tournant à gauche et les autres à droite.

Evidemment, au travers d'une identification scrupuleuse de ces moteurs sur cette ligne de fabrication, on tente d'éviter toute erreur d'équipement d'un volet roulant d'un moteur inadapté.

On comprend, au vu de la description qui précède, que les contraintes liées à la construction de moteurs distincts sont multiples. En particulier, il est nécessaire de gérer deux modes de câblage sur les postes de montage de ces moteurs et il doit être géré des stocks spécifiques pour chaque type de moteurs.

Pour éviter une telle conception de moteurs différents selon qu'ils sont prévus pour être installés à droite ou à gauche d'un caisson de volet roulant, l'on a d'ores et déjà imaginé un protocole de programmation qui, au travers d'impulsions spécifiques exercées sur les boutons de l'interrupteur de commande, permet de transformer à distance un moteur d'un volet roulant tournant dans un sens donné lors de la commande « montée », en un moteur tournant en sens inverse sous l'impulsion de cette même commande. Cependant, cette programmation est délicate à réaliser, même exécutée par un installateur spécialisé. De plus, elle représente une perte de temps non négligeable lors de la pose du volet roulant. Dans tous les cas, cette solution n'est pas sans risque d'erreur.

Par exemple, on connait par le document FR-2.671.129 un dispositif de commande pour moteur asynchrone à deux sens de rotation utilisés pour l'entraînement d'un store ou volet roulant. Ce dispositif comporte un interrupteur de commande accessible à l'usager et équipé d'un bouton de commande montée, d'un bouton de commande descente et, en plus, d'un bouton stop. Entre cet interrupteur et le moteur est interposé un boîtier de commande et d'alimentation contenant une unité logique de traitement dans laquelle est mémorisé un programme d'inversion de sens de rotation du moteur, sachant que depuis l'interrupteur de commande, il peut être lancé ce programme d'inversion pour changer le sens de rotation du moteur de sorte que celui-ci assure bien le déploiement du store ou du volet roulant lorsque l'usager appuie sur le bouton « descente » et, contrairement, le repliement de ce store ou de ce volet roulant lorsqu'il est actionné le bouton « montée ».

Il est également connu par le document EP-0 833 435 un autre dispositif de commande pour moteur asynchrone à deux sens de rotation utilisé pour l'entraînement d'un store ou d'un volet roulant. Ce dispositif comporte un point de commande, autrement dit un interrupteur accessible à l'usager et comportant un bouton « montée » et un bouton « descente ». Il comprend encore des moyens de reconnaissance du sens du déplacement du store pour comparer celui-ci par rapport à l'ordre émis par l'interrupteur de commande. De plus, ces moyens sont en mesure de commander, si nécessaire, l'inversion du sens de rotation du moteur du volet roulant

La présente invention se veut à même de répondre aux inconvénients de l'état de la technique au travers d'un dispositif de fermeture à tablier ou store repliable ou enroulable, comportant un interrupteur de commande avec au moins un bouton pour la commande de repliement et de déploiement dudit tablier ou store sous l'impulsion d'un moteur d'entraînement électrique implanté d'un côté latéral ou de l'autre dudit tablier ou store, à ce moteur étant associés des moyens de sélection comportant une unité de contrôle conçue pour, au travers d'une interface de puissance, assurer la gestion du sens de rotation dudit moteur sous l'impulsion de moyens de commande adaptés, caractérisé par le fait que lesdits moyens de commande de ces moyens de sélection sont définis apte à interagir avec des moyens de sélection complémentaires disposés d'un côté latéral et/ou de l'autre du tablier ou store pour déterminer automatiquement le sens de rotation par défaut de ce moteur selon qu'il est installé d'un côté (16) ou de l'autre (17) de ce tablier ou store (2).

En d'autres termes, au travers de ces moyens de sélection un moteur, défini comme tournant normalement à droite sous l'impulsion sur le bouton de commande de repliement du store ou du tablier, peut conserver ce sens normal de rotation lorsque fixé, par exemple dans le cas d'un volet roulant, sur la joue support gauche de ce volet roulant ou, au contraire, peut être automatiquement reprogrammé en un moteur tournant normalement à gauche lorsque fixé sur la joue support opposée. Bien évidement on peut imaginer une conception inversée.

En d'autres termes, par le simple fait du montage du moteur à gauche ou à droite du tablier ou store, le sens de rotation de ce moteur est immédiatement adapté pour garantir le repliement et le déploiement du tablier ou store sous l'effet d'une impulsion sur le bouton de commande de « montée », respectivement « descente » de l'interrupteur de commande accessible à l'usager.

De manière avantageuse, les moyens de commande des moyens de sélection sont constitués par un interrupteur à au moins deux positions conçues aptes à être commandées par les moyens de sélection complémentaires.

Selon un autre mode de réalisation, les moyens de commande sont de type à effet électromagnétique.

Selon encore un autre mode de réalisation les moyens de commande sont de type optique.

Les avantages découlant de la présente invention consistent en ce qu'il n'est plus nécessaire de gérer la fabrication de deux types de moteurs différents, ni même, au moment de l'installation d'un dispositif de fermeture sur site, de se lancer dans une programmation complexe pour adapter le sens de rotation d'un moteur en fonction de son implantation à gauche ou à droite d'un tablier ou store. Cette sélection du sens de rotation du moteur est assurée de manière automatique au moment du montage de ce moteur sur le dispositif de fermeture, par exemple dans le caisson du volet roulant du store ou similaire et/ou lors de la fixation de la tête de ce moteur sur une des joues supports assurant le maintien en rotation du tube d'enroulement de ce tablier ou store.

Si la gestion de fabrication de ces moteurs est simplifiée, le travail du monteur est, également, plus aisé, car plus rapide et sans risque d'erreur.

La présente invention sera mieux comprise à la lecture de la description qui va suivre et au vu des dessins ci-joints se rapportant à des exemples de réalisation.
- les figures 1 et 2 représentent une installation du moteur d'entraînement d'un côté et de l'autre du dispositif de fermeture de type volet roulant dont le tablier se déploie sous l'impulsion de la rotation du tube d'enroulement dans un sens déterminé ;
- les figures 3 et 4 sont des représentations similaires aux figures 1 et 2 pour un tablier se déployant sous l'impulsion de la rotation du tube d'enroulement en sens inverse ;
- La figure 5 est une représentation schématisée d'un volet roulant ;
- La figure 6 est un schéma électrique des moyens de sélection associés au moteur.
- Les figures 7 et 8 représentent schématiquement d'autres modes de réalisation des moyens de sélection et de ceux complémentaires, notamment sous forme optique.

La présente invention concerne le domaine des dispositifs de fermeture de bâtiment du type comportant un tablier ou un store repliable ou enroulable. Aussi, si la description qui suit se rapporte, plus particulièrement, à un volet roulant, la présente invention ne peut être limitée à cette application.

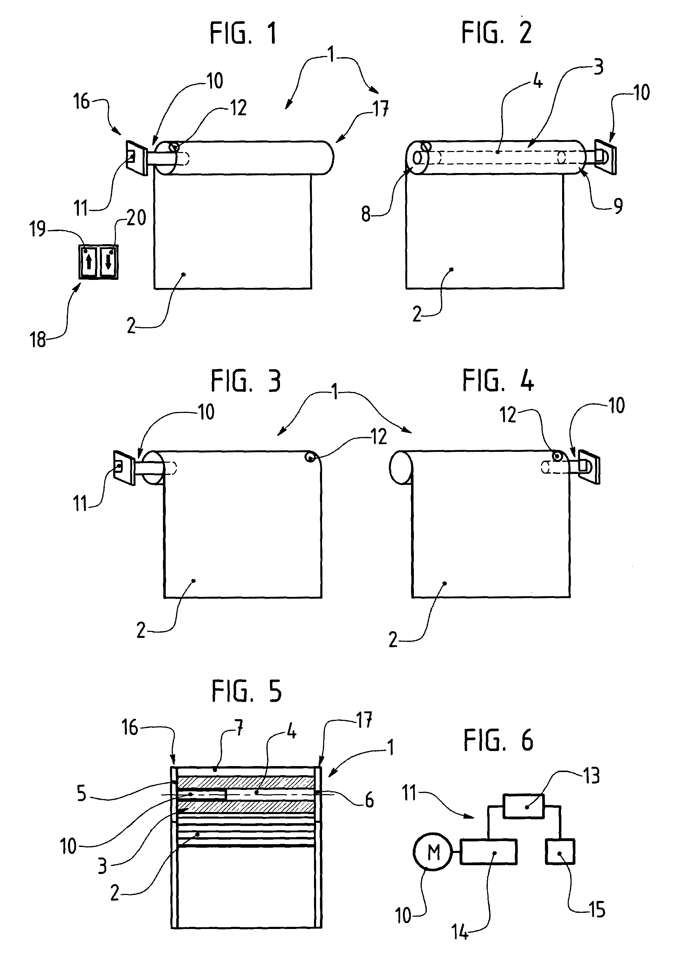

Ainsi, comme illustré schématiquement dans la figure 5, un tel volet roulant 1 comporte un tablier 2 qui, grâce à un mécanisme d'entraînement 3, est susceptible d'être enroulé ou déployé au-devant d'une ouverture correspondant à une porte, fenêtre ou similaire. Dans ce cas, ce mécanisme d'entraînement 3 consiste en un tube d'enroulement 4 maintenu à ses extrémités par des joues supports latérales 5, 6, l'ensemble prenant position, très fréquemment, dans un caisson 7.

Dans l'une 8 ou l'autre 9 des extrémités du tube d'enroulement 4, est engagé un moteur d'entraînement 10, comportant une tête de moteur venant se fixer sur l'une ou l'autre joue support 5, 6.

On retrouvera une configuration similaire dans le cadre d'un dispositif de fermeture dont le tablier, plutôt que d'être enroulable est repliable. En effet, là encore, les lames composant un tel tablier sont habituellement amenées à se replier, en venant se positionner de manière juxtaposée les unes aux autres, dans un caisson dans lequel ces lames sont maintenues, à leurs extrémités, par des joues supports.

Le fonctionnement d'un tel moteur 10 est commandé au travers d'un interrupteur 18 disposé à la portée de l'usage. Cet interrupteur 18 comporte au moins un bouton de commande 19, 20 pour assurer le repliement et le déploiement du tablier ou du store 2. De manière usuelle, ce sont ainsi deux boutons de commande 19, 20 qui équipent un tel interrupteur 18, dont un est actionné pour assurer le repliement et l'autre le déploiement.

Comme souhaitent le représenter les figures 1 à 4 du dessin ci-joint, un moteur 10 câblé pour tourner par défaut dans un sens de rotation donné sous l'impulsion du bouton de commande de repliement 19, dit « montée » dans la suite de la description, peut provoquer, non pas le repliement, mais le déploiement, s'il n'est pas placé du bon côté, autrement dit à la bonne extrémité 8 ou 9 du tube d'enroulement 4 du tablier 2. En effet, pour un même sens de rotation d'un moteur 10 il se produit une inversion du sens de déplacement du tablier ou store 2 selon que ce moteur 10 est placé d'un côté ou de l'autre de ce dernier.

Aussi, selon l'invention, il est associé à ce moteur 10 des moyens de sélection 11 qui, sous l'impulsion de moyens de sélection complémentaires 12 implantés d'un côté latéral 16 et/ou de l'autre 17 du tablier ou store 2 du dispositif de fermeture 1, déterminent le sens de rotation par défaut du moteur 10.

Ainsi, pour un moteur tournant naturellement par défaut à gauche suite à une impulsion sur le bouton de commande « montée » 19, grâce à ces moyens de sélection 11 qui lui sont associés et les moyens de sélection complémentaires 12 que comporte le dispositif de fermeture 1, ce moteur 10 conservera son sens de rotation naturel par défaut s'il est installé d'un côté 16 du tablier ou du store 2, tandis qu'il sera re-sélectionné pour tourner par défaut en sens inverse à droite lorsque installé du côté opposé 17.

L'on comprend bien que s'il est conçu systématiquement des moteurs tournant par défaut que dans un sens déterminé, les moyens de sélection complémentaires 12 dont est équipé le dispositif de fermeture 1 ne peuvent être installés que d'un côté 8 du tablier ou du store 2. Cependant, l'invention n'exclut pas la possibilité d'installer de chacun des côtés 8, 9 de ce tablier ou de ce store 2, de tels moyens de sélection complémentaires 12 définis aptes à sélectionner, grâce aux moyens de sélection 11 associés au moteur 10, le sens de rotation de ce dernier sous l'effet d'une impulsion sur le bouton de commande « montée » 19 et sur celui de « descente » 20 de l'interrupteur 18.

Selon l'invention et tel que visible dans la figure 6, les moyens de sélection 11 associés au moteur 10 comportent une unité de contrôle 13, substantiellement un microprocesseur, conçu apte, au travers d'une interface de puissance 14, à sélectionner le sens de rotation par défaut du moteur 10. En conséquence, ce microprocesseur intervient, grâce à l'interface de puissance 14, sur le mode de câblage de ce moteur 10.

L'unité de contrôle 13 vient interagir sur l'interface de puissance 14 sous l'impulsion de moyens de commande 15 que comportent ces moyens de sélection 11 et définis aptes à interagir avec les moyens de sélection complémentaires 12.

De tels moyens de commande 15 peuvent emprunter différentes formes de réalisation. En particulier, ils peuvent se présenter sous forme d'un interrupteur mécanique à au moins deux positions susceptibles d'être sélectionnées par les moyens de sélection complémentaires 12 sous forme d'un doigt de commande que comporte d'un côté latéral 16 et/ou de l'autre 17 du tablier ou store 2.

Préférentiellement, lesdits moyens de sélection complémentaires 12 sont associés à l'une et/ou l'autre joue support 5, 6 que comportent habituellement de tels dispositifs de fermeture que sont les volets roulant ou autres stores ou portes repliables, enroulables, etc....

Les moyens de commande 15 peuvent encore adopter d'autres formes de réalisation.

Plus particulièrement, ils peuvent être de type électromagnétique.

Ainsi, à titre d'exemple, ces moyens de commande 15 peuvent emprunter la forme d'un capteur électromagnétique sur lequel est capable d'interagir un aimant permanent ou électro-aimant, constituant substantiellement les moyens de sélection complémentaires 12. Ainsi, ce capteur peut être du type à effet Hall ou magnéto-résistif. Il peut encore se présenter sous forme d'un interrupteur à lame souple, dit ILS ou ampoule REED, mais il peut aussi être défini substantiellement par un capteur magnétique dit MEMS.

Comme souhaitent l'illustrer les figures 1 à 4, un seul aimant peut ainsi équiper le volet roulant 1 d'un côté latéral 16 du tablier ou store 2 capable d'interagir avec le capteur électromagnétique du moteur 10, lorsque l'un et l'autre sont positionnés en vis-à-vis pour, par exemple dans ce cas, sélectionner une inversion du sens de rotation par défaut de ce moteur 10.

L'installation du moteur 10 du côté latéral opposé 17 du tablier ou store 2, donc du côté du volet roulant dépourvu d'un tel aimant, a pour conséquence, pour l'unité de contrôle 13, de constater l'absence de signal en provenance des moyens de commande 15. Cela peut se traduire par aucune intervention sur le sens de rotation par défaut du moteur 10 au travers de l'interface de puissance 14.

L'on peut également imaginer les moyens de commande 15 sous forme d'un contacteur que viennent, selon le cas, ouvrir ou fermer les moyens de sélection complémentaires 12. Ainsi, ceux-ci peuvent se présenter, par exemple sous forme d'un doigt de commande d'ouverture de ce contacteur, ou d'une lame conductrice capable, au contraire, de fermer ce contacteur normalement ouvert.

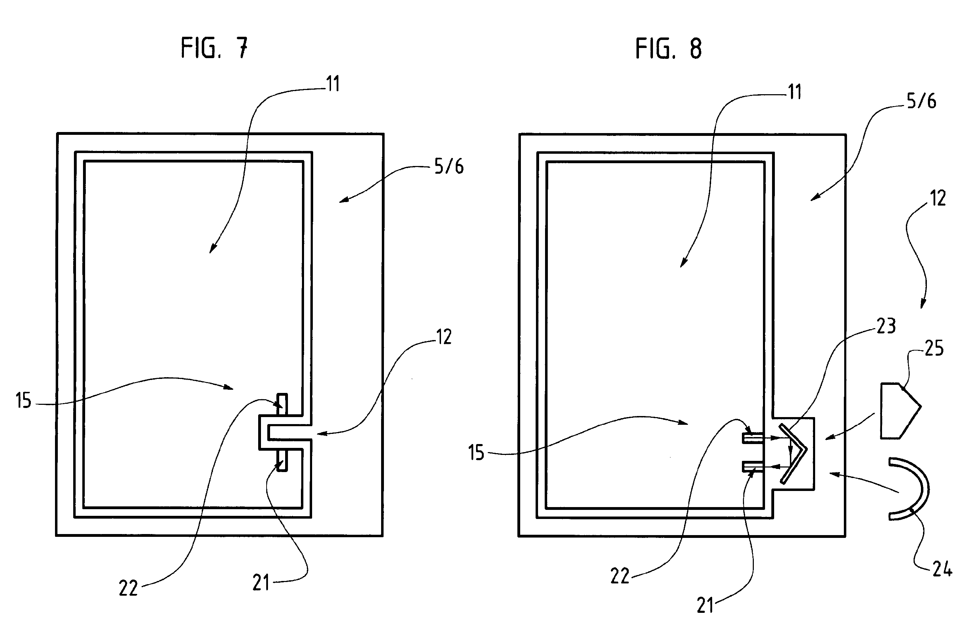

Selon d'autres modes de réalisation que souhaitent représenter de manière schématisées les figure 7 et 8, les moyens de commande 15 peuvent également être de type optique et se présenter sous forme d'un émetteur/récepteur optique, 21, 22, les moyens de sélection complémentaires 12 étant eux-mêmes de nature optique, par exemple définis par au moins un miroir 23 et/ou au moins une fibre optique 24 et/ou au moins un prisme en polycarbonate ou en verre 25 équipant le dispositif de fermeture 1 d'un côté latéral 16 ou de l'autre 17 du tablier ou du store 2, par exemple l'une ou l'autre joue support 5, 6 pour, selon l'extrémité 8, 9 où est disposé le moteur 10, renvoyer, en direction du récepteur 22, au moins une partie d'un rayon lumineux émis par l'émetteur 21 des moyens de commande 15 correspondant aux moyens de sélection 11. En d'autres termes, selon que le moteur est implanté d'un côté 16 ou de l'autre 17 du tablier ou store 2 son sens de rotation sera inversé si le capteur optique perçoit ou non en retour le rayonnement lumineux qu'il émet.

A l'inverse, comme le souhaite représenter le schéma de la figure 8, les moyens de sélection complémentaires 12 peuvent avoir pour effet de couper le rayonnement entre l'émetteur 21 et le récepteur 22 selon qu'il convient ou non d'inverser ce sens de rotation du moteur 10. Ainsi, par exemple, ils peuvent se présenter sous forme d'un paroi opaque ou d'une chicane (non représentée) d'un côté latéral 16 et/ou de l'autre 17 du tablier ou du store 2, pour, selon l'extrémité 8, 9 où est disposé le moteur 10, s'interposer entre l'émetteur 21 et le récepteur 22 du capteur optique lors du montage du moteur 10, ayant pour conséquence, au travers de l'unité de contrôle 13 et de l'interface de puissance 14, de générer l'inversion ou non du fonctionnement de ce moteur 10 sous l'impulsion du bouton de commande « montée » 19, respectivement « descente » 20 de l'interrupteur 18.

Evidemment on peut aussi envisager que cette inversion de rotation intervienne au contraire quand le faisceau lumineux n'est pas coupé entre l'émetteur 21 et le récepteur 22 des moyens de commande 15.

Comme déjà évoqué plus haut, les moyens de sélection complémentaires 12, en l'occurrence un aimant ou tout autre organe de commande, sont préférentiellement associés à l'une et/ou l'autre joue support 5, 6, de part et d'autre du mécanisme d'entraînement 3 du tablier ou store 2, joues supports 5, 6, sur lesquelles est susceptible d'être fixé le moteur 10, plus particulièrement la tête de ce moteur équipée, en correspondance, des moyens de sélection 11.

Les avantages découlant de la présente invention consistent en une gestion de fabrication simplifiée des moteurs d'entraînement de ces dispositifs de fermeture de bâtiment, de type volet roulant ou similaire. En outre, l'assemblage et le montage sur site de ces dispositifs de fermeture est également considérablement facilité.

## Revendications

1. Dispositif de fermeture à tablier ou store (2) repliable ou enroulable, comportant un interrupteur de commande (18) avec au moins un bouton (19, 20) pour la commande de repliement et de déploiement dudit tablier ou store (2) sous l'impulsion d'un moteur d'entraînement électrique (10) implanté d'un côté latéral (16) ou de l'autre (17) dudit tablier ou store (2), à ce moteur (10) étant associés des moyens de sélection (11) comportant une unité de contrôle (13) conçue pour assurer, au travers d'une interface de puissance (14), la gestion du sens de rotation dudit moteur (10), sous l'impulsion de moyens de commande (15) que comportent ces moyens de sélection (11), **caractérisé par le fait que** lesdits moyens de commande (15) sont définis apte à interagir avec des moyens de sélection complémentaires (12) disposés d'un côté latéral (16) et/ou de l'autre (17) du tablier ou store (2) pour déterminer automatiquement le sens de rotation par défaut de ce moteur (10) selon qu'il est installé d'un côté (16) ou de l'autre (17) de ce tablier ou store (2).

2. Dispositif de fermeture selon la revendication 1, **caractérisé par le fait que** les moyens de commande (15) sont constitués par un interrupteur mécanique à au moins deux positions susceptibles d'être sélectionnées par les moyens de sélection complémentaires (12) sous forme d'un doigt de commande que comporte d'un côté latéral (16) et/ou de l'autre (17) le dispositif de fermeture (1).

3. Dispositif de fermeture selon la revendication 1, **caractérisé par le fait que** les moyens de commande (15) sont constitués d'un capteur électromagnétique conçu apte à interagir avec un aimant permanent ou électroaimant constituant substantiellement les moyens de sélection complémentaires (12).

4. Dispositif de fermeture selon la revendication 1, **caractérisé par le fait que** les moyens de commande (15) sont constitués d'un contacteur que viennent, selon le cas, ouvrir ou fermer les moyens de sélection complémentaires (12), sous forme d'un doigt de commande d'ouverture de ce contacteur ou d'une lame conductrice capable, au contraire, de fermer ce contacteur normalement ouvert.

5. Dispositif de fermeture selon la revendication 1, **caractérisé par le fait que** les moyens de commande 15 sont de type optique les moyens de sélection complémentaires 12 étant eux-mêmes de nature optique.

6. Dispositif de fermeture selon la revendication 5, **caractérisé par le fait que** les moyens de commande (15) se présentent sous forme d'un émetteur/récepteur optique (21, 22), les moyens de sélection complémentaires (12) étant définis par au moins un miroir (23) et/ou au moins une fibre optique (24) et/ou au moins un prisme en polycarbonate ou en verre (25) d'un côté latéral (16) et/ou de l'autre (17) du tablier ou du store (2), pour, selon l'extrémité (8, 9) où est disposé le moteur (10), renvoyer, en direction du récepteur (22), au moins une partie d'un rayon lumineux émis par l'émetteur (21).

7. Dispositif de fermeture selon la revendication 5, **caractérisé par le fait que** les moyens de commande (15) se présentent sous forme d'un émetteur/récepteur optique (21, 22), les moyens de sélection complémentaires (12) étant définis par une paroi opaque ou une chicane d'un côté latéral (16) et/ou de l'autre (17) du tablier ou du store (2), pour, selon l'extrémité (8, 9) où est disposé le moteur (10), couper le rayonnement entre l'émetteur (21) et le récepteur (22).

8. Dispositif de fermeture selon l'une quelconque des revendications précédentes, comportant, entre deux joues supports (5, 6), un mécanisme d'entraînement (3) pour le repliement ou l'enroulement ou le déploiement d'un tablier ou store (2) sous l'impulsion d'un moteur d'entraînement (10) conçu apte à être fixé sur l'une ou l'autre desdites joues supports (5, 6), **caractérisé par le fait que** les moyens de sélection complémentaires (12) sont associés à l'une et/ou l'autre joue support (5, 6).

## Patentansprüche

1. Verschlussvorrichtung mit einer Decke oder einem Faltstore (2) oder Rollo, umfassend einen Steuerschalter (18) mit mindestens einem Knopf (19, 20) zur Steuerung des Faltens und Entfaltens der Decke oder des Stores (2) unter der Wirkung eines elektrischen Antriebsmotors (10), der an der einen (16) oder der anderen (17) seitlichen Seite der besagten Decke oder des besagten Stores (2) angeordnet ist, wobei diesem Motor (10) Wahlmittel (11) zugeordnet sind, die eine Steuereinheit (13) umfassen, die vorgesehen ist, um über eine Leistungsschnittstelle (14) die Steuerung der Drehrichtung des besagten Motors (10) unter der Wirkung von Steuermitteln (15), welche diese Wahlmittel (11) umfassen, zu gewährleisten, **dadurch gekennzeichnet, dass** die besagten Steuermittel (15) geeignet vorgesehen sind, um mit ergänzenden Wahlmitteln (12), die an der einen (16) und/oder an der anderen (17) seitlichen Seite der Decke oder des Stores (2) angeordnet sind, zu interagieren, um automatisch die Standard-Drehrichtung dieses Motors (10) zu ermitteln, je nachdem er an der einen (16) oder der anderen (17) Seite dieser Decke oder dieses Stores (2) installiert ist.

2. Verschlussvorrichtung nach Anspruch 1, **dadurch gekennzeichnet, dass** die Steuermittel (15) aus einem mechanischen Schalter mit zumindest zwei Positionen besteht, die in der Lage sind, von den ergänzenden Wahlmitteln (12) gewählt zu werden, die als ein Steuerfinger ausgestaltet sind, welchen die Verschlussvorrichtung (1) an der einen (16) und/oder der anderen (17) seitlichen Seite umfasst.

3. Verschlussvorrichtung nach Anspruch 1, **dadurch gekennzeichnet, dass** die Steuermittel (15) aus einem elektromagnetischen Sensor bestehen, der geeignet vorgesehen ist, mit einem Peimanentmagneten oder Elektromagneten, der im wesentlichen die ergänzenden Wahlmittel (12) bildet, zu interagieren.

4. Verschlussvorrichtung nach Anspruch 1, **dadurch gekennzeichnet, dass** die Steuermittel (15) aus einem Kontaktschalter bestehen, den die ergänzenden Wahlmittel (12) je nach dem Fall öffnen oder schließen, die als ein Finger zum Steuern der Öffnung dieses Kontaktschalters oder ein leitendes Plättchens, das dagegen in der Lage ist, diesen normalerweise offenen Kontaktschalter zu schließen, ausgestaltet sind.

5. Verschlussvorrichtung nach Anspruch 1, **dadurch gekennzeichnet, dass** die Steuermittel optischer Art sind, wobei die ergänzenden Wahlmittel 12 ihrerseits optischer Art sind.

6. Verschlussvorrichtung nach Anspruch 5, **dadurch gekennzeichnet, dass** die Steuermittel (15) als ein optischer Sender/ Empfänger (21, 22) ausgestaltet sind, wobei die zusätzliche Wahlmittel (12) aus zumindest einem Spiegel (23) und/oder zumindest einer optischen Faser (24) und/oder zumindest einem Polycarbonat- oder Glasprisma (25) an der einen (16) und/oder der anderen (17) seitlichen Seite der Decke oder des Stores (2) bestehen, um je nach dem Ende (8, 9), an dem der Motor (10) angeordnet ist, zumindest einen Teil eines von dem Sender (21) ausgestrahlten Lichtstrahls in Richtung auf den Empfänger (22) zurückzustrahlen.

7. Verschlussvorrichtung nach Anspruch 5, **dadurch gekennzeichnet, dass** die Steuermittel (15) als ein optischer Sender/ Empfänger (21, 22) ausgestaltet sind, wobei die zusätzliche Wahlmittel (12) aus zumindest einer undurchsichtigen Wand oder eine Prallplatte an der einen (16) und/oder der anderen (17) seitlichen Seite der Decke oder des Stores (2) bestehen, um je nach dem Ende (8, 9), an dem der Motor (10) angeordnet ist, die Strahlung zwischen dem Sender (21) und dem Empfänger (22) zu unterbrechen.

8. Verschlussvorrichtung nach einem der vorhergehenden Ansprüche, umfassend zwischen zwei seitlichen Stützplatten (5, 6) einen Antriebsmechanismus (3) für das Falten oder Wickeln oder das Entfalten einer Decke oder eines Stores (2) unter der Wirkung eines Antriebsmotors (10), der geeignet vorgesehen ist, um an der einen oder der anderen der besagten seitlichen Stützplatten (5, 6) befestigt zu werden, **dadurch gekennzeichnet, dass** die ergänzenden Wahlmittel (12) der einen und/oder der anderen seitlichen Stützplatten (5, 6) zugeordnet sind.

## Claims

1. A closing device with a shutter or a folding or rolling blind (2), including a control switch (18) with at least one button (19, 20) for controlling the folding and unfolding of said apron or blind (2) under the action of an electric drive motor (10) located at one (16) or the other (17) lateral side of said apron or blind (2), with this motor (10) being associated selecting means (11) including a control unit (13) designed so as to ensure, through a power interface (14), the management of the direction of rotation of said motor (10) under the action of control means (15), which these selecting means (11) include, wherein said control means (15) are defined capable of interacting with complementary selecting means (12) arranged at one (16) and/or the other lateral side (17) of the apron or blind (2) for automatically determining the default direction of rotation of this motor (10) depending on whether it is installed at one (16) or the other (17) side of this apron or blind (2).

2. The closing device according to claim 1, wherein the control means (15) are formed of a mechanical switch with at least two positions likely to be selected by the complementary selecting means (12) in the form of a control finger the closing device (1) includes at one (16) and/or the other (17) lateral side.

3. The closing device according to claim 1, wherein the control means (15) are formed of an electromagnetic sensor designed capable of interacting with a permanent magnet or an electromagnet forming substantially the complementary selecting means (12).

4. The closing device according to claim 1, wherein the control means (15) are formed of a contactor, which, as the case may be, opens or closes the complementary selecting means (12), in the form of a control finger for opening this contactor, or a conductive blade capable, instead, of closing this normally open contactor.

5. The closing device according to claim 1, wherein the control means 15 are of the optical type, the complementary selecting means 12 being, in turn, of the optical type.

6. The closing device according to claim 5, wherein the control means (15) are in the form of an optical transmitter/receiver (21, 22), the complementary selecting means (12) being defined by at least one mirror (23) and/or at least one optical fiber (24) and/or at least one polycarbonate or glass prism (25) at one (16) and/or the other (17) lateral side of the apron or blind (2), for returning, depending on the end (8, 9) at which the motor (10) is arranged, in the direction of the receiver (22), at least part of a light beam transmitted by the transmitter (21).

7. The closing device according to claim 5, wherein the control means (15) are in the form of an optical transmitter/receiver (21, 22), the complementary selecting means (12) being defined by an opaque wall or a baffle plate at one (16) and/or the other (17) lateral side of the apron or blind (2), for cutting, depending on the end (8, 9) at which the motor (10) is arranged, the radiation between the transmitter (21) and the receiver (22).

8. The closing device according to any one of the preceding claims, including, between two lateral supporting plates (5, 6), a drive mechanism (3) for the folding or winding up or the unfolding of an apron or blind (2) under the action of a drive motor (10) designed capable of being fastened to either one of said lateral supporting plates (5, 6), wherein the complementary selecting means (12) are associated with one and/or the other lateral supporting plates (5, 6).
